# EUROPEAN PATENT APPLICATION

(11) **EP 4 841 817 A1**
(43) Date of publication of application: **18.11.2026**
(21) Application number: 24936659.2
(22) Date of filing: 18.10.2024
(51) Int. Cl.: H01M 50/593, H01M 50/586, H01M 10/0525, H01M 10/058

(54) **INSULATING FILM, BATTERY CELL, BATTERY, AND ELECTRIC DEVICE**

(30) Priority: 25.04.2024 CN 202420879523 U
(71) Applicant: Contemporary Amperex Technology Co., Limited, Ningde, Fujian 352100 (CN)
(72) Inventor: KE, Haibo, Ningde, Fujian 352100 (CN); HUANG, Shoujun, Ningde, Fujian 352100 (CN); ZHENG, Yulian, Ningde, Fujian 352100 (CN); JIN, Haizu, Ningde, Fujian 352100 (CN); WANG, Peng, Ningde, Fujian 352100 (CN); LI, Wei, Ningde, Fujian 352100 (CN)
(74) Representative: Lorenz Seidler Gossel Part. mbB
(86) International application number: PCT/CN2024/125873
(87) International publication number: WO 2025/222767

(57) **Abstract**

Provided in the embodiments of the present disclosure are an insulating film, a battery cell, a battery, and an electric device. The battery cell comprises an electrode assembly, a casing and an insulating film. The electrode assembly comprises a plurality of surfaces, the plurality of surfaces comprising a first surface, which is the surface with the largest area among the plurality of surfaces. The casing forms an accommodating space for accommodating the electrode assembly. The insulating film wraps around the periphery of the electrode assembly and is located between the electrode assembly and the casing, and the insulating film has a first thickness area and a second thickness area, wherein the thickness of the first thickness area is greater than that of the second thickness area, and the first thickness area is located in the area where the first surface of the electrode assembly is located.

## Description

### CROSS-REFERENCE TO RELATED APPLICATION

The present disclosure is presented based on Chinese Patent Application No. 202420879523.7, filed on April 25, 2024 and entitled "INSULATING FILM, BATTERY CELL, BATTERY, AND ELECTRIC DEVICE", and claims priority to the Chinese Patent Application, the content of which is incorporated herein by reference in its entirety.

### TECHNICAL FIELD

The present disclosure relates to the technical field of batteries, and in particular, to an insulating film, a battery cell, a battery, and an electric device.

### BACKGROUND

This part is intended to provide background or context for embodiments of the present disclosure. The description herein is not recognized as the prior art by virtue of inclusion in this part.

During a battery assembly process, a housing insertion step is performed after the assembly of a bare cell. When the bare cell is placed into a housing, a layer of Mylar film is wrapped on the outer surface of the bare cell to protect the bare cell and provide an insulating function. In the related art, during the charging and discharging process of a battery, the bare cell expands, which easily causes the large surface of the bare cell to be in pressing contact with the housing, while the side surface of the bare cell is less likely to be in contact with the housing. When thermal runaway occurs inside the bare cell, the heat is more easily transferred to the large surface of an aluminum housing, resulting in the problem of poor thermal insulation.

### SUMMARY

In view of this, embodiments of the present disclosure are intended to provide an insulating film, a battery cell, a battery, and an electric device, which can improve the thermal insulation effect.

To this end, a first aspect of the embodiments of the present disclosure provides a battery cell. The battery cell includes:
an electrode assembly, where the electrode assembly includes a plurality of surfaces, the plurality of surfaces include a first surface, and the first surface is a surface with a largest area among the plurality of surfaces;
a housing body forming an accommodating space for accommodating the electrode assembly; and
an insulating film, where the insulating film wraps an outer periphery of the electrode assembly and is located between the electrode assembly and the housing body, the insulating film is provided with a first thickness region and a second thickness region, and a thickness of the first thickness region is greater than a thickness of the second thickness region. The first thickness region is located in a region where the first surface of the electrode assembly is located.

The battery cell according to the embodiments of the present disclosure includes an electrode assembly and an insulating film. The insulating film is provided with the first thickness region and the second thickness region, the thickness of the first thickness region is greater than the thickness of the second thickness region, and the first thickness region is disposed in the region where the first surface of the electrode assembly is located. That is, the thickness of the insulating film wrapping at least a partial region of the first surface of the electrode assembly is greater than the thickness of the insulating film wrapping other surfaces of the electrode assembly except the first surface. In this way, when the electrode assembly experiences a short circuit, overcharging, or internal thermal runaway, the rapid transfer of heat to the housing can be mitigated, thereby improving the thermal insulation and protection effect of the insulating film, and consequently improving the reliability of the battery cell.

In some embodiments, the insulating film is formed by folding a substrate, the insulating film includes an overlapping region where the substrate is disposed in an overlapping manner, and the overlapping region constitutes the first thickness region.

In this way, it is equivalent to that the thickness of the insulating film in the region where the first surface of the electrode assembly is located is greater than the thickness of the insulating film on other surfaces, thereby increasing the thickness of the insulating film between the region where the first surface of the electrode assembly is located and the housing, and consequently improving the thermal insulation effect of the insulating film.

In some embodiments, a length of the electrode assembly is L0, and a dimension of the first thickness region in a length direction of the electrode assembly is L1, where a ratio of L1 to L0 ranges from 0.8 to 1.

In this way, the insulating film corresponding to the first surface of the electrode assembly can have sufficient structural strength and thermal insulation effect without affecting the assembly of the battery cell, and the structural compactness and performance of the battery cell can be maintained.

In some embodiments, the insulating film is formed by folding a substrate, and a thickness of the substrate is 0.05 mm to 0.3 mm.

In one aspect, the thickness of the insulating film corresponding to the first surface of the electrode assembly can be increased, thereby providing better thermal insulation and protection; in another aspect, in the case where the insulating film corresponding to the first surface of the electrode assembly has the same thickness, the thickness of the insulating film corresponding to the side surface of the electrode assembly can be reduced, thereby reducing the cost of the battery.

In some embodiments, the insulating film is formed by folding a substrate, the substrate is provided with a first wall thickness region and a second wall thickness region, and a thickness of the first wall thickness region is greater than a thickness of the second wall thickness region, where the first wall thickness region is folded to form the first thickness region, and the second wall thickness region is folded to form the second thickness region.

In this way, it is equivalent to that the thickness of the insulating film in the region where the first surface of the electrode assembly is located is greater than the thickness of the insulating film on other surfaces, thereby increasing the thickness of the insulating film between the first surface of the electrode assembly and the housing, and consequently improving the thermal insulation effect of the insulating film.

In some embodiments, the battery cell includes a housing, the electrode assembly wrapped with the insulating film is disposed in the housing, and a distance between a top of the insulating film and a top cover of the housing is 0.1 mm to 5 mm.

This is beneficial to achieving the connection between the insulating film and the top cover while minimizing the impact on the assembly of the top cover to the housing body.

In some embodiments, one electrode assembly is provided, and regions where two first surfaces of the electrode assembly are located are each provided with the first thickness region.

In this way, the thermal insulation and protection effect of the insulating film is further improved, and the reliability of the battery cell is further improved.

In some embodiments, the battery cell includes a housing, the electrode assembly is disposed in the housing, two electrode assemblies are provided, regions where the first surfaces, facing away from each other, of the two electrode assemblies are located are each provided with the first thickness region, and no first thickness region is provided in regions where the first surfaces, opposite to each other, of the two electrode assemblies are located.

In this way, the thermal insulation and protection effect of the insulating film is improved, and meanwhile, the space occupied by the insulating film can also be reduced, thereby helping improve the performance of the battery.

In some embodiments, the insulating film includes a substrate and a spray coating layer, and the spray coating layer is disposed in a partial region of the substrate to form the first thickness region.

Here, by forming an insulating spray coating layer through spraying a coating material such as ceramic on the substrate corresponding to the first surface of the electrode assembly, the thickness of the insulating film corresponding to the first surface of the electrode assembly is increased, thereby improving the thermal insulation effect of the insulating film.

In some embodiments, the insulating film includes a substrate and an engraving adhesive, and the engraving adhesive is provided in a partial region of the substrate to form the first thickness region.

Here, by providing the engraving adhesive on the substrate corresponding to the first surface of the electrode assembly, the thickness of the insulating film corresponding to the first surface of the electrode assembly is increased, thereby improving the thermal insulation effect of the insulating film.

A second aspect of the embodiments of the present disclosure provides an insulating film. The insulating film is used as the battery cell described above, and the insulating film is configured to wrap an electrode assembly of the battery cell.

In the insulating film according to the embodiments of the present disclosure, the insulating film is provided with a first thickness region and a second thickness region, the thickness of the first thickness region is greater than the thickness of the second thickness region, and the first thickness region is disposed on a first surface of the electrode assembly. That is, the thickness of the insulating film wrapping at least a partial region of the first surface of the electrode assembly is greater than the thickness of the insulating film wrapping other surfaces of the electrode assembly except the first surface. In this way, when the electrode assembly experiences a short circuit, overcharging, or internal thermal runaway, the rapid transfer of heat to the housing can be mitigated, thereby improving the thermal insulation and protection effect of the insulating film, and consequently improving the reliability of the battery cell.

In some embodiments, the insulating film is formed by folding a substrate provided with a bottom surface wrapping wall, a first side surface wrapping wall, and a second side surface wrapping wall, and the area of the second side surface wrapping wall is greater than the area of the first side surface wrapping wall; and when the substrate is in an unfolded state, two ends, in a first direction, of the bottom surface wrapping wall are each connected to one first side surface wrapping wall, and two ends, in a second direction, of each first side surface wrapping wall are each connected to one second side surface wrapping wall. The first direction intersects with the second direction.

By configuring the insulating film to overlap at the first surface of the electrode assembly, the thickness of the insulating film between the first surface of the electrode assembly and the housing is increased, thereby improving the thermal insulation effect of the insulating film.

A third aspect of the embodiments of the present disclosure provides a battery. The battery includes at least one battery cell described above.

The insulating film of the battery according to the embodiments of the present disclosure is provided with a first thickness region and a second thickness region, the thickness of the first thickness region is greater than the thickness of the second thickness region, and the first thickness region is disposed in a region where the first surface of the electrode assembly is located. That is, the thickness of the insulating film wrapping at least a partial region of the first surface of the electrode assembly is greater than the thickness of the insulating film wrapping other surfaces of the electrode assembly except the first surface. In this way, when the electrode assembly experiences a short circuit, overcharging, or internal thermal runaway, the rapid transfer of heat to the housing can be mitigated, thereby improving the thermal insulation and protection effect of the insulating film, and consequently improving the reliability of the battery cell.

A fourth aspect of the embodiments of the present disclosure provides an electric device. The electric device includes the battery described above, and the battery is configured to provide electric energy.

The insulating film of the battery of the electric device according to the embodiments of the present disclosure is provided with a first thickness region and a second thickness region, the thickness of the first thickness region is greater than the thickness of the second thickness region, and the first thickness region is disposed in a region where the first surface of the electrode assembly is located. That is, the thickness of the insulating film wrapping at least a partial region of the first surface of the electrode assembly is greater than the thickness of the insulating film wrapping other surfaces of the electrode assembly except the first surface. In this way, when the electrode assembly experiences a short circuit, overcharging, or internal thermal runaway, the rapid transfer of heat to the housing can be mitigated, thereby improving the thermal insulation and protection effect of the insulating film, and consequently improving the reliability of the battery cell.

### BRIEF DESCRIPTION OF THE DRAWINGS

FIG. 1 is a schematic structural diagram of a vehicle according to an embodiment of the present disclosure;
FIG. 2 is a three-dimensional schematic exploded diagram of a battery according to an embodiment of the present disclosure;
FIG. 3 is a schematic structural diagram of a battery cell according to an embodiment of the present disclosure;
FIG. 4 is a three-dimensional schematic exploded diagram of the battery cell shown in FIG. 3;
FIG. 5 is a schematic structural diagram of the insulating film shown in FIG. 4; and
FIG. 6 is a schematic structural diagram of a substrate in an unfolded state according to an embodiment of the present disclosure.

### Description of reference numerals:

1. insulating film; 11. substrate; 111. second side surface wrapping wall; 112. first side surface wrapping wall; 113. bottom surface wrapping wall; 2. electrode assembly; 3. housing; 31. housing body; 32. top cover; 4. blue film; 5. bottom support plate; 6. adapter member; 10. battery cell; 20. battery case; 21. first case part; 22. second case part; 100. battery; 200. controller; 300. motor; 1000. vehicle.

### DETAILED DESCRIPTION

It should be noted that in the absence of conflicts, embodiments and technical features of the embodiments in the present disclosure may be combined with each other. The detailed description in the detailed description should be understood as an explanation of the purpose of the present disclosure and should not be considered as an improper limitation to the present disclosure.

Unless otherwise defined, all technical and scientific terms used herein have the same meaning as commonly understood by those skilled in the art to which the present disclosure belongs. The terms used herein are intended to merely describe the specific embodiments, rather than to limit the present disclosure. The terms "include", "comprise", "have", and "provided with", and any other variations thereof in the present disclosure are intended to cover non-exclusive inclusions.

In the description of the embodiments of the present disclosure, the technical terms "first", "second", "third", and the like are merely intended to distinguish different objects and should not be understood as any indication or implication of relative importance or any implicit indication of the number, specific sequence, or primary-secondary relationship of the technical features indicated. In the description of the embodiments of the present disclosure, unless otherwise specifically defined, "plurality of" means two or more.

Reference in the present disclosure to "embodiment" means that a particular feature, structure, or characteristic described in combination with the embodiment can be included in at least one embodiment of the present disclosure. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present disclosure, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present disclosure, the technical terms "length", "width", "thickness", "upper", "lower", "front", "rear", "left", "right", "vertical", "horizontal", "top", "bottom", "inner", "outer", "circumferential", "height direction", "first direction", "second direction", and the like indicate orientations or positional relationships based on those shown in the drawings. They are merely for the convenience of describing the embodiments of the present disclosure and simplifying the description, rather than indicating or implying that the device or element referred to must have a specific orientation or be constructed, operated, or used in the specific orientation, and thus should not be construed as a limitation to the embodiments of the present disclosure.

In the description of the embodiments of the present disclosure, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present disclosure can be interpreted according to specific conditions.

In the description of the embodiments of the present disclosure, unless otherwise clearly specified and defined, the technical term "contact" should be interpreted in a broad sense. For example, the "contact" may be direct contact, or contact through an intermediate medium layer, or contact without an interaction force between two contacting elements, or contact with an interaction force between two contacting elements.

With the development of clean energy, more and more devices are powered by electric energy, which in turn drives the rapid development of power batteries (such as lithium-ion batteries) that can store large amounts of electric energy and undergo multiple charge-discharge cycles. Power batteries are not only applied in energy storage power systems such as hydropower, thermal power, wind power, and solar power stations, but are also widely applied in electric transportation vehicles such as electric bicycles, electric motorcycles, or electric vehicles, as well as in aerospace and other fields.

The battery mentioned in the embodiments of the present disclosure refers to a single physical module including one or more battery cells to provide higher voltage and capacity. For example, the battery mentioned in the present disclosure may include a battery module, a battery pack, or the like. The battery generally includes a case configured to encapsulate one or more battery cells. The case can prevent liquid or other foreign matter from affecting the charging or discharging of the battery cells.

A battery cell includes an electrode assembly and an electrolytic solution. The electrode assembly is composed of a positive electrode plate, a negative electrode plate, and a separator. The battery cell primarily works by the movement of metal ions between the positive electrode plate and the negative electrode plate. The positive electrode plate includes a positive electrode current collector and a positive electrode active substance layer. The positive electrode active substance layer is coated on the surface of the positive electrode current collector. The positive electrode current collector not coated with the positive electrode active substance layer protrudes from the positive electrode current collector coated with the positive electrode active substance layer. The positive electrode current collector not coated with the positive electrode active substance layer serves as a positive electrode tab. Taking lithium-ion batteries as an example, the material of the positive electrode current collector may be aluminum, and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is coated on the surface of the negative electrode current collector. The negative electrode current collector not coated with the negative electrode active substance layer protrudes from the negative electrode current collector coated with the negative electrode active substance layer. The negative electrode current collector not coated with the negative electrode active substance layer serves as a negative electrode tab. The material of the negative electrode current collector may be copper, and the negative electrode active substance may be carbon, silicon, or the like. To ensure the passing of a large current without fusing, a plurality of positive electrode tabs are provided and stacked together, and a plurality of negative electrode tabs are provided and stacked together. The material of the separator may be polypropylene (PP), polyethylene (PE), or the like.

Illustratively, the positive electrode current collector is provided with two surfaces opposite to each other in its own thickness direction, and the positive electrode active material is disposed on either or both of the two opposite surfaces of the positive electrode current collector.

Illustratively, a metal foil or a composite current collector may be used as the positive electrode current collector. For example, for the metal foil, aluminum treated with silver on the surface, stainless steel treated with silver on the surface, stainless steel, copper, aluminum, nickel, carbon electrode, carbon, nickel, titanium, or the like may be used. The composite current collector may include a polymer material base layer and a metal layer. The composite current collector may be formed by forming a metal material (aluminum, aluminum alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene).

Illustratively, the negative electrode may be a negative electrode plate, and the negative electrode plate may include a negative electrode current collector.

Illustratively, the negative electrode current collector may be made of a metal foil or a composite current collector. For example, for the metal foil, aluminum treated with silver on the surface, stainless steel treated with silver on the surface, stainless steel, copper, aluminum, nickel, carbon electrode, carbon, nickel, titanium, or the like may be used.

Illustratively, the negative electrode current collector is provided with two surfaces opposite to each other in its own thickness direction, and the negative electrode active material is disposed on either or both of the two opposite surfaces of the negative electrode current collector.

Illustratively, the negative electrode active material may be any negative electrode active material known in the art for use in batteries. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present disclosure is not limited to these materials, and other conventional materials that can be used as negative electrode active materials for batteries may also be used. These negative electrode active materials may be used alone or in combination of two or more.

The battery cell further includes an insulating film and a housing. The insulating film wraps outside the electrode assembly, and the housing encapsulates the electrode assembly wrapped with the insulating film to form the battery cell. The insulating film may be a polyester film (mylar film), and the housing may be an aluminum housing or a steel housing. After the electrode assembly is wound and formed, the encapsulation of the Mylar film and the housing is completed through a Mylar packaging process and a housing insertion process. The Mylar film functions to seal and protect the electrode assembly, and the Mylar film can effectively insulate the electrode assembly from the housing to avoid short circuits inside the battery cell. The housing serves a protective function.

Illustratively, the housing includes a top cover and a housing body. The housing body is provided with an opening, and the top cover closes the opening to form a confined space for accommodating the electrode assembly, the electrolyte, and other substances. The housing body may be provided with one or more openings. The top cover may also be provided with one or more openings.

Illustratively, at least one electrode terminal is disposed on the housing, and the electrode terminal is electrically connected to the tabs of the electrode assembly. The electrode terminal may be directly connected to the tabs or may be indirectly connected to the tabs via an adapter member. The electrode terminal may be disposed on the top cover or may be disposed on the housing body.

Illustratively, the housing is provided with an anti-explosion valve. The anti-explosion valve is configured to relieve the internal pressure of the battery cell.

Illustratively, the battery cell may be a cylindrical battery cell, a prismatic battery cell, a pouch battery cell, or a battery cell of other shapes. The prismatic battery cell includes a square-housing battery cell, a blade-shaped battery cell, and a polygonal prismatic battery, and the polygonal prismatic battery is, for example, a hexagonal prismatic battery. This is not particularly limited in the embodiments of the present disclosure.

Illustratively, the battery cell further includes a pressure relief structure. The pressure relief structure may be disposed on the top cover or on the housing to release the internal pressure or reduce the internal temperature of the battery cell.

Battery technology advancement requires consideration of various design factors at the same time, such as energy density, discharge capacity, charging and discharging rate, and other performance parameters. In addition, the reliability of the battery also needs to be considered.

The battery cell includes a housing body, a top cover, an insulating member, an electrode assembly, and an insulating film. The top cover closes the opening of the housing body, the electrode assembly is disposed in the housing, and the insulating member is disposed between the top cover and the electrode assembly. The insulating member abuts against the electrode assembly to achieve the positioning of the electrode assembly. The insulating film wraps at least a part of the electrode assembly and the insulating member to insulate and isolate the electrode assembly from the housing body. In the related art, after the battery cell is charged and discharged, the electrode assembly expands in the thickness direction, which easily causes the large surface (first surface) of the electrode assembly to be in pressing contact with the housing, while the side surface (other surfaces other than the first surface) of the electrode assembly is less likely to be in contact with the housing. As a result, when thermal runaway occurs inside the electrode assembly, the internal temperature of the electrode assembly rises sharply, and the large surface of the electrode assembly is prone to melting the insulating film, allowing the heat to be transferred to the large surface of the housing and further to the adjacent battery cells, thereby leading to thermal propagation among the adjacent battery cells and resulting in fire and explosion.

In view of this, in order to improve the reliability of the battery cell, the embodiments of the present disclosure provide a battery cell. The battery cell includes an electrode assembly, a housing body, and an insulating film. The electrode assembly includes a plurality of surfaces. The plurality of surfaces include a first surface, and the first surface is a surface with the largest area among the plurality of surfaces. The housing body forms an accommodating space for accommodating the electrode assembly. The insulating film wraps the outer periphery of the electrode assembly and is located between the electrode assembly and the housing body, the insulating film is provided with a first thickness region and a second thickness region, and the thickness of the first thickness region is greater than the thickness of the second thickness region. The first thickness region is located in a region where the first surface of the electrode assembly is located.

The battery cell according to the embodiments of the present disclosure includes an electrode assembly, a housing body, and an insulating film. The insulating film is provided with the first thickness region and the second thickness region, the thickness of the first thickness region is greater than the thickness of the second thickness region, and the first thickness region is disposed in the region where the first surface of the electrode assembly is located. That is, the thickness of the insulating film wrapping at least a partial region of the first surface of the electrode assembly is greater than the thickness of the insulating film wrapping other surfaces of the electrode assembly except the first surface. In this way, when the electrode assembly experiences a short circuit, overcharging, or internal thermal runaway, the rapid transfer of heat to the housing can be mitigated, thereby improving the thermal insulation and protection effect of the insulating film, and consequently improving the reliability of the battery cell.

The technical solutions described in the embodiments of the present disclosure are applicable to batteries and electric apparatuses using batteries.

The battery mentioned in the embodiments of the present disclosure refers to a battery at least one battery cell according to the embodiments of the present disclosure. A single physical module with one or more battery cells, providing higher voltage and capacity. For example, the battery mentioned in the present disclosure may include a battery module, a battery pack, or the like. The battery generally includes a case configured to encapsulate one or more battery cells. The case can prevent liquid or other foreign matter from affecting the charging or discharging of the battery cells.

The electric apparatus may be a vehicle, a mobile phone, a portable device, a laptop computer, a ship, a spacecraft, an electric toy, an electric tool, or the like. The vehicle may be a fuel vehicle, a gas vehicle, or a new energy vehicle, and the new energy vehicle may be a pure electric vehicle, a hybrid vehicle, an extended-range vehicle, or the like; the spacecraft includes an airplane, a rocket, a space shuttle, a spaceship, and the like; the electric toy includes a stationary or mobile electric toy, such as a game console, an electric car toy, an electric ship toy, and an electric airplane toy; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer. The electric apparatus described above is not specially limited in the embodiments of the present disclosure.

It should be noted that the technical solutions described in the embodiments of the present disclosure are not limited to the batteries and electric apparatuses described above. They are also applicable to all batteries that include a case, as well as electric apparatuses using batteries. However, for brevity, the following embodiments are described using an electric vehicle as an example.

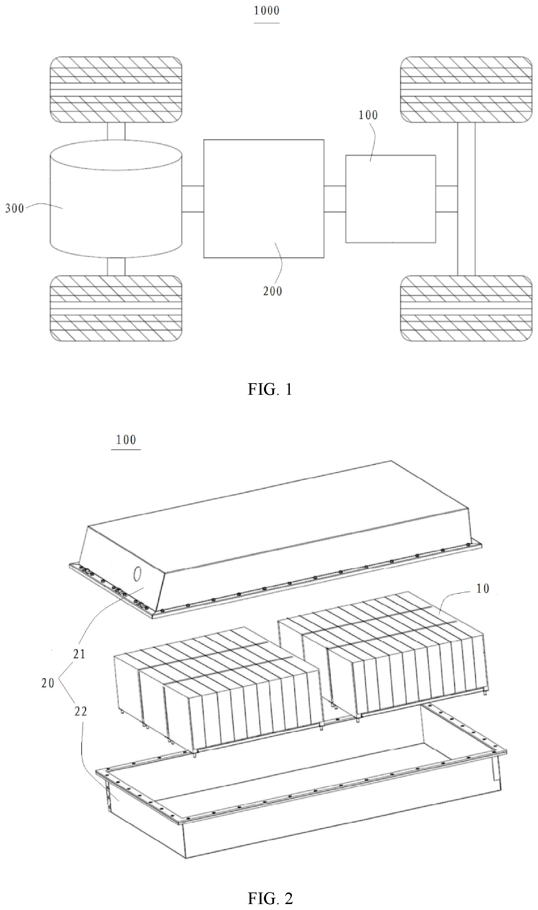

Referring to FIG. 1, a controller 200, a motor 300, and a battery 100 may be disposed inside a vehicle 1000. The controller 200 is configured to control the battery 100 to supply power to the motor 300. For example, the battery 100 may be disposed at the bottom, front, or rear of the vehicle 1000. The battery 100 may be configured to supply power to the vehicle 1000. For example, the battery 100 may serve as an operation power source for the vehicle 1000 and is configured in a circuit system of the vehicle 1000, for example, for the startup and navigation of the vehicle 1000 and for the working power demand during operation. In another embodiment of the present disclosure, the battery 100 may not only serve as an operation power source for the vehicle 1000, but also serve as a driving power source for the vehicle 1000 to, replacing or partially replacing fuel or natural gas, provide driving power for the vehicle 1000.

To meet different power usage requirements, the battery 100 may include a plurality of battery cells 10, and a battery cell 10 refers to the smallest unit that forms a battery module or a battery pack. The plurality of battery cells 10 may be connected in series, in parallel, or in series-parallel. The series-parallel connection means that both series connection and parallel connection are present for the connection among the plurality of battery cells 10. The plurality of battery cells 10 may be directly connected in series, in parallel, or in series-parallel, and then the whole formed by the plurality of battery cells 10 is accommodated in a battery case 20. Certainly, the situation may be that in the battery 100, the plurality of battery cells 10 are first connected in series, in parallel, or in series-parallel to form battery modules, and then the plurality of battery modules are connected in series, in parallel, or in series-parallel to form a whole and accommodated in the battery case 20. The battery 100 may further include other structures. For example, the battery 100 may further include a busbar component for achieving an electrical connection among the plurality of battery cells 10. Each battery cell 10 may be a secondary battery or a primary battery; it may also be a lithium-sulfur battery, a sodium-ion battery, or a magnesium-ion battery, but is not limited thereto. The battery cell 10 may be cylindrical, flat, rectangular parallelepiped-shaped, or in other shapes.

Referring to FIG. 2, the battery 100 includes a battery case 20 and at least one battery cell 10. The battery cell 10 is disposed in the mounting space of the battery case 20.

The battery case 20 may be of a simple three-dimensional structure, such as a single rectangular parallelepiped, cylinder, or sphere, or may also be of a complex three-dimensional structure composed of simple three-dimensional structures, such as a rectangular parallelepiped, a cylinder, or a sphere. The battery case 20 may be made of an alloy material such as aluminum alloy or iron alloy, or a polymer material such as polycarbonate or polyisocyanurate foam plastic, or a composite material such as glass fiber plus epoxy resin.

The battery case 20 is configured to accommodate the battery cell 10, and the battery case 20 may be of various structures. In some embodiments, the battery case 20 may include a first case part 21 and a second case part 22. The first case part 21 and the second case part 22 are mutually lidded with each other, and the first case part 21 and the second case part 22 jointly define a mounting space for accommodating the battery cell 10. The second case part 22 may be of a hollow structure with one end open, the first case part 21 is of a plate-like structure, and the open side of the second case part 22 is lidded with the first case part 21 to form the battery case 20 having the mounting space. The first case part 21 and the second case part 22 may each be of a hollow structure with one side open, and the open side of the second case part 22 is lidded with the open side of the first case part 21 to form the battery case 20 having the mounting space. Certainly, the first case part 21 and the second case part 22 may be in various shapes, such as a cylindrical shape and a rectangular parallelepiped shape.

To improve the sealing performance after the first case part 21 and the second case part 22 are connected, a sealing member, such as a sealant or a seal ring, may be further provided between the first case part 21 and the second case part 22.

If the top part of the second case part 22 is lidded with the first case part 21, the first case part 21 may also be referred to as an upper case cover, and the second case part 22 may also be referred to as a lower case cover.

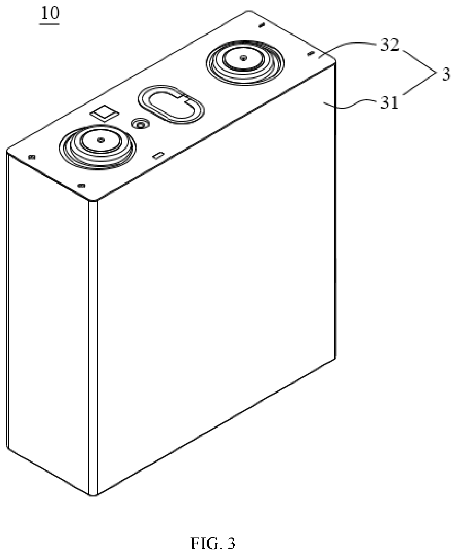

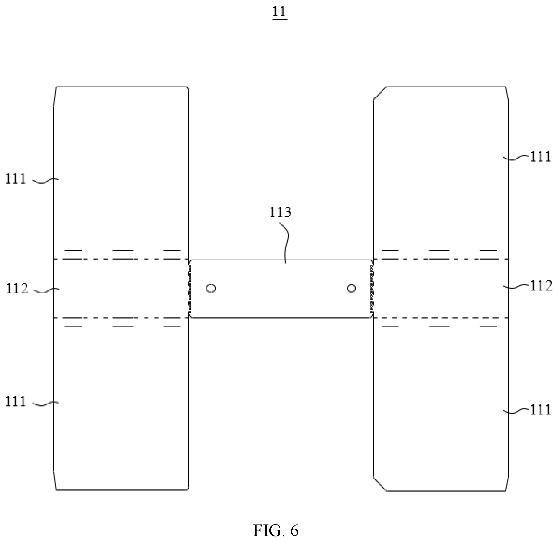

The embodiments of the present disclosure provide a battery cell 10. Referring to FIGs. 3 to 6, the battery cell 10 includes an electrode assembly 2, a housing body, and an insulating film 1. The electrode assembly 2 includes a plurality of surfaces. The plurality of surfaces include a first surface, and the first surface is a surface with the largest area among the plurality of surfaces. The housing body forms an accommodating space for accommodating the electrode assembly 2. The insulating film 1 wraps the outer periphery of the electrode assembly 2 and is located between the electrode assembly 2 and the housing body 3. The insulating film 1 is provided with a first thickness region and a second thickness region. The thickness of the first thickness region is greater than the thickness of the second thickness region. The first thickness region is located in a region where the first surface of the electrode assembly 2 is located.

Illustratively, the battery cell 10 includes a housing 3, the insulating film 1 wraps outside the electrode assembly 2, and the housing 3 encapsulates the electrode assembly 2 wrapped with the insulating film 1 to form the battery cell 10.

It should be noted that the first surface according to the embodiments of the present disclosure is a large surface of the electrode assembly 2, which is the surface with the largest area among the plurality of surfaces of the electrode assembly 2.

Taking a prismatic battery cell 10 as an example, in a vertical state, the surface formed by the length direction and the width direction of the battery cell 10 is the bottom surface of the battery cell 10, the surface formed by the length direction and the height direction of the battery cell 10 is the large surface of the battery cell 10, and the surface formed by the width direction and the height direction of the battery cell 10 is the side surface of the battery cell 10.

Here, the electrode assembly 2 is formed by winding a positive electrode plate, a negative electrode plate, and a separator. The separator is configured for separating the positive electrode plate from the negative electrode plate and serves to insulate the positive electrode plate from the negative electrode plate.

The insulating film 1 is, for example, a polyester film (Mylar film). The Mylar film wraps the outer periphery of the electrode assembly 2 and is located between the electrode assembly 2 and the housing body to seal and protect the electrode assembly 2, and the Mylar film can effectively insulate the electrode assembly 2 from the housing 3 to avoid short circuits inside the battery cell 10. The housing 3 protects the electrode assembly 2 located therein.

It can be understood that the insulating film 1 may also function as a thermal insulation layer between the electrode assembly 2 and the housing 3; that is, the insulating film provides thermal insulation for the electrode assembly 2.

The insulating film 1 is provided with a first thickness region and a second thickness region, and the thickness of the first thickness region is greater than the thickness of the second thickness region. That is, the insulating film 1 is provided with at least two regions of different thicknesses. In this way, the insulating film 1 can be arranged as required.

The first thickness region is located in the region where the first surface of the electrode assembly 2 is located, that is, the thickness of the insulating film 1 wrapping at least a partial region of the first surface of the electrode assembly 2 is greater than the thickness of the insulating film 1 wrapping the small surface of the electrode assembly 2.

In the related art, after the battery cell is charged and discharged, the electrode assembly expands in the thickness direction, which easily causes the large surface of the electrode assembly to be in pressing contact with the housing, while the side surface of the electrode assembly is less likely to be in contact with the housing. As a result, when thermal runaway occurs inside the electrode assembly, the internal temperature of the electrode assembly rises sharply, and the large surface of the electrode assembly is prone to melting the insulating film, allowing the heat to be transferred to the large surface of the housing and further to the adjacent battery cells, thereby leading to thermal propagation among the adjacent battery cells and resulting in fire and explosion.

The battery cell 10 according to the embodiments of the present disclosure includes the electrode assembly 2, the housing body, and the insulating film 1. The insulating film 1 is provided with the first thickness region and the second thickness region, the thickness of the first thickness region is greater than the thickness of the second thickness region, and the first thickness region is disposed in the region where the first surface of the electrode assembly 2 is located. That is, the thickness of the insulating film 1 wrapping at least a partial region of the first surface of the electrode assembly 2 is greater than the thickness of the insulating film 1 wrapping other surfaces of the electrode assembly 2 except the first surface. In this way, when the electrode assembly 2 experiences a short circuit, overcharging, or internal thermal runaway, the rapid transfer of heat to the housing 3 can be mitigated, thereby improving the thermal insulation and protection effect of the insulating film 1, and consequently improving the reliability of the battery cell 10.

In the related art, the insulating film of the electrode assembly is wrapped in a side-overlapping manner. That is, the insulating film on the large surface of the electrode assembly is a single layer, which means that the thermal insulation layer on the large surface of the electrode assembly is formed by one layer of insulating film. The insulating film in at least a partial region of the side surface of the electrode assembly has two layers, which means that the thermal insulation layer in at least a partial region of the side surface of the electrode assembly is formed by two layers of insulating film.

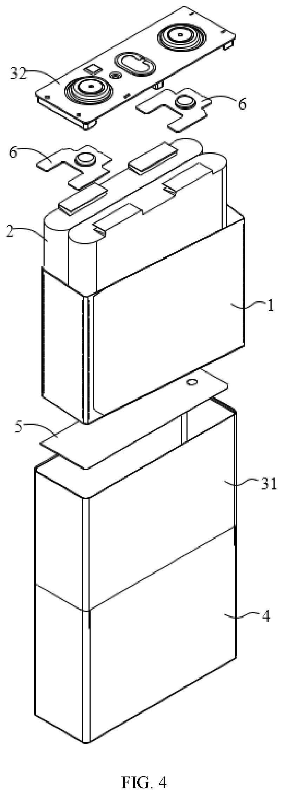

In some embodiments, referring to FIGs. 4 to 6, the insulating film 1 is formed by folding a substrate 11. The insulating film 1 includes an overlapping region where the substrate 11 is disposed in an overlapping manner. The overlapping region constitutes the first thickness region.

That is, the substrate 11 is formed into the insulating film 1 of a desired shape by steps such as folding and bonding. The substrate 11 is wound in a circumferential direction of the electrode assembly. During the winding process, the tail part of the substrate 11 extends beyond the head part of the substrate 11, such that an overlapping region is formed between the head part and the tail part of the substrate 11. The thickness of the overlapping region is twice the thickness of the substrate.

The insulating film 1 includes an overlapping region where the substrate 11 is disposed in an overlapping manner; that is, the number of layers of the substrate 11 in the overlapping region of the insulating film 1 is at least two.

Here, the substrate 11 has a uniform thickness, except that the substrate 11 is disposed in an overlapping manner to increase the thickness of the insulating film 1 in the overlapping region.

In the embodiments, the insulating film 1 includes an overlapping region where the substrate 11 is disposed in an overlapping manner, and the overlapping region constitutes the first thickness region. That is, the insulating film 1 in the region where the first surface of the electrode assembly 2 is located has at least two layers, which means that the thermal insulation layer in the region where the first surface of the electrode assembly 2 is located is formed by at least two layers of insulating film 1. In this way, the thickness of the insulating film 1 in the region where the first surface of the electrode assembly 2 is located is greater than the thickness of the insulating film 1 on other surfaces, thereby increasing the thickness of the insulating film 1 between the first surface of the electrode assembly 2 and the housing 3, and consequently improving the thermal insulation effect of the insulating film 1.

In some embodiments, the insulating film 1 includes a substrate 11 and a spray coating layer, and the spray coating layer is disposed in a partial region of the substrate 11 to form the first thickness region.

Here, by forming an insulating spray coating layer through spraying a coating material such as ceramic on the substrate 11 corresponding to the first surface of the electrode assembly 2, the thickness of the insulating film 1 corresponding to the first surface of the electrode assembly 2 is increased, thereby improving the thermal insulation effect of the insulating film 1.

In some embodiments, the insulating film 1 includes a substrate 11 and an engraving adhesive, and the engraving adhesive is provided in a partial region of the substrate 11 to form the first thickness region.

Here, by providing the engraving adhesive on the substrate 11 corresponding to the first surface of the electrode assembly 2, the thickness of the insulating film 1 corresponding to the first surface of the electrode assembly 2 is increased, thereby improving the thermal insulation effect of the insulating film 1.

In some embodiments, one electrode assembly 2 is provided, and two first surfaces of the electrode assembly 2 are each provided with the first thickness region.

In the embodiments, the two first surfaces of the electrode assembly 2 are each provided with the first thickness region; that is, the thickness of the insulating film 1 wrapping at least a partial region of the two first surfaces of the electrode assembly 2 is greater than the thickness of the insulating film 1 wrapping other surfaces of the electrode assembly 2 except the first surface. In this way, the thermal insulation and protection effect of the insulating film 1 is further improved, and the reliability of the battery cell 10 is further improved.

Certainly, in other embodiments, the situation may be that one of the first surfaces of the electrode assembly 2 is provided with a first thickness region, and the other first surface is provided with a first thickness region.

In some embodiments, the battery cell 10 includes a housing 3, the electrode assembly 2 is disposed in the housing 3, two electrode assemblies 2 are provided, regions where the first surfaces, facing away from each other, of the two electrode assemblies 2 are located are each provided with the first thickness region, and no first thickness region is provided in regions where the first surfaces, opposite to each other, of the two electrode assemblies 2 are located.

Here, the large surfaces, facing away from each other, of the two electrode assemblies 2 are each provided with the first thickness region, and no first thickness region is provided on the large surfaces, opposite to each other, of the two electrode assemblies 2. This means that the large surfaces, proximal to the housing 3, of the two electrode assemblies 2 are each provided with the first thickness region, and no first thickness region is provided on the large surfaces, proximal to the other electrode assembly 2, of the two electrode assemblies.

In this way, the thermal insulation and protection effect of the insulating film 1 is improved, and meanwhile, the space occupied by the insulating film 1 can also be reduced, thereby helping improve the performance of the battery.

It should be noted that the foregoing several approaches may be separately implemented or may be simultaneously implemented.

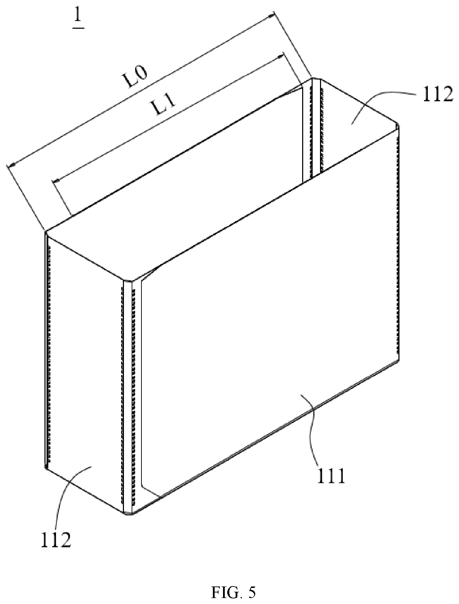

In some embodiments, referring to FIG. 5, the length of the electrode assembly 2 is L0, and the dimension of the first thickness region in the length direction of the electrode assembly 2 is L1, where the ratio of L1 to L0 ranges from 0.8 to 1. For example, the ratio is 0.8, 0.85, 0.9, 0.95, 1, or the like.

By setting the ratio of the dimension of the first thickness region in the length direction of the electrode assembly 2 to the length of the electrode assembly 2 to be 0.8 to 1, the insulating film 1 corresponding to the first surface of the electrode assembly 2 can have sufficient structural strength and thermal insulation effect without affecting the assembly of the battery cell 10, and the structural compactness and performance of the battery cell 10 can be maintained.

In some embodiments, referring to FIGs. 4 to 6, the insulating film 1 is formed by folding a substrate 11, and the substrate 11 has a thickness of 0.05 mm to 0.3 mm.

For example, the thickness is 0.05 mm, 0.06 mm, 0.07 mm, 0.08 mm, 0.1 mm, 0.12 mm, 0.13 mm, 0.15 mm, 0.18 mm, 0.2 mm, 0.22 mm, 0.23 mm, 0.25 mm, 0.27 mm, 0.29 mm, 0.3 mm, or the like.

The thickness of the substrate 11 is set to be 0.05 mm to 0.3 mm, and the thickness of the insulating film 1 wrapping at least a partial region of the first surface of the electrode assembly 2 is greater than the thickness of the insulating film 1 wrapping other surfaces of the electrode assembly 2 except the first surface. In one aspect, the thickness of the insulating film 1 corresponding to the first surface of the electrode assembly 2 can be increased, thereby providing better thermal insulation and protection; in another aspect, in the case where the insulating film 1 corresponding to the first surface of the electrode assembly 2 has the same thickness, the thickness of the insulating film 1 corresponding to other surfaces of the electrode assembly 2 except the first surface can be reduced, thereby reducing the cost of the battery 100.

In some embodiments, the insulating film 1 is formed by folding a substrate 11, the substrate 11 is provided with a first wall thickness region and a second wall thickness region, and the thickness of the first wall thickness region is greater than the thickness of the second wall thickness region. The first wall thickness region is folded to form a first thickness region, and the second wall thickness region is folded to form a second thickness region.

The substrate 11 is provided with the first wall thickness region and the second wall thickness region, and the thickness of the first wall thickness region is greater than the thickness of the second wall thickness region. That is, the substrate 11 is provided with at least two regions of different thicknesses. In this way, the substrate 11 can be arranged as required.

The thickness of the first wall thickness region is greater than the thickness of the second wall thickness region. The first wall thickness region is folded to form the first thickness region, and the second wall thickness region is folded to form the second thickness region. That is, the thickness of the insulating film 1 wrapping at least a partial region of the first surface of the electrode assembly 2 is greater than the thickness of the insulating film 1 wrapping other surfaces of the electrode assembly 2 except the first surface.

In the embodiments, the substrate 11 is configured to include two different wall thicknesses, namely the first wall thickness region and the second wall thickness region, the first wall thickness region with a larger wall thickness is disposed on the first surface of the electrode assembly 2, and the second wall thickness region with a smaller wall thickness is disposed on other surfaces of the electrode assembly 2 except the first surface. In this way, it is equivalent to that the thickness of the insulating film 1 corresponding to the first surface of the electrode assembly 2 is greater than the thickness of the insulating film 1 on other surfaces except the first surface, thereby increasing the thickness of the insulating film 1 between the first surface of the electrode assembly 2 and the housing 3, and consequently improving the thermal insulation effect of the insulating film 1.

In some embodiments, the battery cell 10 includes a housing 3, the electrode assembly 2 wrapped with the insulating film 1 is disposed in the housing 3, and the distance between the top of the insulating film 1 and a top cover 32 of the housing 3 is 0.1 mm to 5 mm. For example, the distance is 0.1 mm, 0.3 mm, 0.5 mm, 0.8 mm, 1 mm, 1.5 mm, 1.8 mm, 2 mm, 2.3 mm, 2.8 mm, 3 mm, 3.5 mm, 3.8 mm, 4 mm, 4.5 mm, 4.8 mm, 5 mm, or the like.

Illustratively, the housing 3 includes a top cover 32 and a housing body 31. The housing body 31 is provided with an opening, and the top cover 32 closes the opening to form a confined space for accommodating the electrode assembly 2, the electrolyte, and other substances.

Here, the distance between the top of the insulating film 1 and the top cover 32 of the housing 3 refers to the distance between the insulating film 1 and the top cover 32 in the height direction of the battery cell 10.

Illustratively, the battery cell 10 further includes a lower plastic part, the top cover 32 closes the opening of the housing body 31, the electrode assembly 2 is disposed in the housing 3, and the lower plastic part is disposed between the top cover 32 and the electrode assembly 2. The lower plastic part abuts against the electrode assembly 2 to achieve the positioning of the electrode assembly 2. The insulating film 1 wraps at least a part of the electrode assembly 2 and the lower plastic part to insulate and isolate the electrode assembly 2 from the housing body 31.

Here, the insulating film 1 is connected to the lower plastic part by ultrasonic welding or hot melting.

In the embodiments, the distance between the top of the insulating film 1 and the top cover 32 of the housing 3 is set to be 0.1 mm to 5 mm, which is beneficial to achieving the connection between the insulating film 1 and the top cover 32 while minimizing the impact on the assembly of the top cover 32 to the housing body 31.

In some embodiments, referring to FIGs. 4 to 6, the embodiments of the present disclosure further provide an insulating film 1. The insulating film 1 is used as the battery cell 10 according to any embodiment of the present disclosure, and the insulating film 1 is configured to wrap an electrode assembly 2 of the battery cell 10.

The insulating film 1 is provided with a first thickness region and a second thickness region, the thickness of the first thickness region is greater than the thickness of the second thickness region, and the first thickness region is disposed on the first surface of the electrode assembly 2. That is, the thickness of the insulating film 1 wrapping at least a partial region of the first surface of the electrode assembly 2 is greater than the thickness of the insulating film 1 wrapping other surfaces of the electrode assembly 2 except the first surface. In this way, when the electrode assembly 2 experiences a short circuit, overcharging, or internal thermal runaway, the rapid transfer of heat to the housing 3 can be mitigated, thereby improving the thermal insulation and protection effect of the insulating film 1, and consequently improving the reliability of the battery cell 10.

In some embodiments, with further reference to FIGs. 4 to 6, the insulating film 1 is formed by folding a substrate 11 provided with a bottom surface wrapping wall 113, a first side surface wrapping wall 112, and a second side surface wrapping wall 111, and the area of the second side surface wrapping wall 111 is greater than the area of the first side surface wrapping wall 112; and when the substrate 11 is in an unfolded state, two ends, in a first direction, of the bottom surface wrapping wall 113 are each connected to one first side surface wrapping wall 112, and two ends, in a second direction, of each first side surface wrapping wall 112 are each connected to one second side surface wrapping wall 111. The first direction intersects with the second direction.

The first direction intersecting with the second direction means that the first direction is not parallel to the second direction. Illustratively, the first direction and the second direction are perpendicular to each other.

Here, the first direction is the length direction of the battery cell 10, and the second direction is the width direction of the battery cell 10.

Two first side surface wrapping walls 112 are respectively connected to two ends, in the first direction, of the bottom surface wrapping wall 113, and two ends, in the second direction, of each first side surface wrapping wall 112 are each connected to one second side surface wrapping wall 111. That is, when the substrate 11 is in an unfolded state, the substrate 11 includes four second side surface wrapping walls 111; when the substrate 11 is in a wrapped state, two second side surface wrapping walls 111 jointly wrap the large surface of the electrode assembly 2, and the two second side surface wrapping walls 111 have an overlapping region. The overlapping region constitutes the first thickness region, and a non-overlapping region of the second side surface wrapping walls 111 constitutes the second thickness region. The bottom surface wrapping wall 113 wraps the bottom surface of the electrode assembly 2, and the two first side surface wrapping walls 112 wrap two side surfaces of the electrode assembly 2, respectively.

The structural strength at the joint among the bottom surface wrapping wall 113, the first side surface wrapping wall 112, and the second side surface wrapping wall 111 is less than the structural strength of the bottom surface wrapping wall 113, the first side surface wrapping wall 112, and the second side surface wrapping wall 111. For example, an indentation is provided, or a structurally weakened region is formed. In this way, the folding at the joint is facilitated, thereby improving the assembly efficiency and reliability.

In the embodiments, when the substrate 11 is in a wrapped state, each first surface of the electrode assembly 2 is wrapped with two second side surface wrapping walls 111; the two second side surface wrapping walls 111 have an overlapping region, and the overlapping region constitutes the first thickness region. That is, by configuring the insulating film 1 to overlap at the large surface of the electrode assembly 2, the thickness of the insulating film 1 between the first surface of the electrode assembly 2 and the housing 3 is increased, thereby improving the thermal insulation effect of the insulating film 1.

It should be noted that data such as the length L0 of the electrode assembly 2, the dimension L1 of the first thickness region in the length direction of the electrode assembly 2, the thickness of the substrate 11, and the distance between the top of the insulating film 1 and the top cover 32 of the housing 3 can be obtained at room temperature using a high-precision thickness gauge, a vernier caliper, or the like.

The electrode terminal on the housing 3 is electrically connected to the tab of the electrode assembly 2. Illustratively, referring to FIG. 4, the battery cell 10 is provided with an adapter member 6, and the electrode terminal is indirectly connected to the tab via the adapter member 6.

Illustratively, referring to FIG. 4, the battery cell 10 includes a bottom support plate 5, and the bottom support plate 5 is disposed in the housing 3 and located at the bottom of the electrode assembly 2.

Illustratively, referring to FIG. 4, the battery cell 10 includes a blue film 4, and the blue film 4 wraps the outer periphery of the housing 3 to insulate adjacent battery cells 10 from each other.

In the description of the present disclosure, the description of reference terms "in an embodiment", "in some embodiments", "in some other embodiments", "in yet some other embodiments", "illustratively", or the like means that a particular feature, structure, material, or characteristic described in connection with the embodiments or examples is included in at least one embodiment or example of the embodiments of the present disclosure. In the present disclosure, the illustrative expressions of the above terms are not necessarily directed to the same embodiment or example. Moreover, the specific features, structures, materials, or characteristics described may be combined appropriately in any one or more embodiments or examples. In addition, various embodiments or examples and features of various embodiments or examples described in the present disclosure can be combined by those skilled in the art to the extent that they do not contradict each other.

The above are only preferred embodiments of the present disclosure and are not intended to limit the present disclosure. For those skilled in the art, the present disclosure can be modified and varied. Any modifications, equivalent substitutions, improvements, and the like made within the spirit and principle of the present disclosure all fall within the protection scope of the present disclosure.

## Claims

1. A battery cell, comprising:
an electrode assembly, wherein the electrode assembly comprises a plurality of surfaces, the plurality of surfaces comprise a first surface, and the first surface is a surface with a largest area among the plurality of surfaces;
a housing body forming an accommodating space for accommodating the electrode assembly; and
an insulating film, wherein the insulating film wraps an outer periphery of the electrode assembly and is located between the electrode assembly and the housing body, the insulating film is provided with a first thickness region and a second thickness region, and a thickness of the first thickness region is greater than a thickness of the second thickness region, wherein the first thickness region is located in a region where the first surface of the electrode assembly is located.

2. The battery cell according to claim 1, wherein the insulating film is formed by folding a substrate, the insulating film comprises an overlapping region where the substrate is disposed in an overlapping manner, and the overlapping region constitutes the first thickness region.

3. The battery cell according to any one of claims 1 to 2, wherein a length of the electrode assembly is L0, and a dimension of the first thickness region in a length direction of the electrode assembly is L1, wherein a ratio of L1 to L0 ranges from 0.8 to 1.

4. The battery cell according to any one of claims 1 to 3, wherein the insulating film is formed by folding a substrate, and a thickness of the substrate is 0.05 mm to 0.3 mm.

5. The battery cell according to any one of claims 1 to 4, wherein the insulating film is formed by folding a substrate, the substrate has a first wall thickness region and a second wall thickness region, and a thickness of the first wall thickness region is greater than a thickness of the second wall thickness region, wherein the first wall thickness region is folded to form the first thickness region, and the second wall thickness region is folded to form the second thickness region.

6. The battery cell according to any one of claims 1 to 5, wherein the battery cell comprises a housing, the electrode assembly wrapped with the insulating film is disposed in the housing, and a distance between a top of the insulating film and a top cover of the housing is 0.1 mm to 5 mm.

7. The battery cell according to any one of claims 1 to 6, wherein one electrode assembly is provided, and regions where two first surfaces of the electrode assembly are located are each provided with the first thickness region.

8. The battery cell according to any one of claims 1 to 6, wherein the battery cell comprises a housing, the electrode assembly is disposed in the housing, two electrode assemblies are provided, regions where the first surfaces, facing away from each other, of the two electrode assemblies are located are each provided with the first thickness region, and no first thickness region is provided in a region where the first surfaces, opposite to each other, of the two electrode assemblies are located.

9. The battery cell according to claim 1, wherein the insulating film comprises a substrate and a spray coating layer, and the spray coating layer is disposed in a partial region of the substrate to form the first thickness region.

10. The battery cell according to claim 1, wherein the insulating film comprises a substrate and an engraving adhesive, and the engraving adhesive is provided in a partial region of the substrate to form the first thickness region.

11. An insulating film, wherein the insulating film is used as the battery cell according to any one of claims 1 to 6, and the insulating film is configured to wrap an electrode assembly of the battery cell.

12. The insulating film according to claim 11, wherein the insulating film is formed by folding a substrate provided with a bottom surface wrapping wall, a first side surface wrapping wall, and a second side surface wrapping wall, and an area of the second side surface wrapping wall is greater than an area of the first side surface wrapping wall; and when the substrate is in an unfolded state, two ends, in a first direction, of the bottom surface wrapping wall are each connected to one first side surface wrapping wall, and two ends, in a second direction, of each first side surface wrapping wall are each connected to one second side surface wrapping wall, wherein the first direction intersects with the second direction.

13. A battery, comprising at least one battery cell according to any one of claims 1 to 12.

14. An electric device, comprising the battery according to claim 13, wherein the battery is configured to provide electrical energy.
